# EUROPEAN PATENT APPLICATION

(11) **EP 4 645 570 A1**
(43) Date of publication of application: **05.11.2025**
(21) Application number: 23912247.6
(22) Date of filing: 27.12.2023
(51) Int. Cl.: H01M 50/463, H01G 11/52, H01G 11/84, H01M 10/04, H01M 10/052, H01M 10/0587, H01M 50/414, H01M 50/434, H01M 50/443, H01M 50/449, H01M 50/46, H01M 50/489, H01M 50/531, H01M 50/536

(54) **POWER STORAGE DEVICE, SEPARATOR FOR POWER STORAGE DEVICES, AND METHOD FOR PRODUCING SAME**

(30) Priority: 28.12.2022 JP 2022211689; 31.01.2023 JP 2023013001
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2023/046931
(87) International publication number: WO 2024/143469

(57) **Abstract**

A disclosed power storage device includes an electrode group that includes a positive electrode (10), a negative electrode (20), and a separator (30). In the electrode group, the positive electrode (10), the negative electrode (20), and the separator (30) are stacked in a stacking direction such that the separator (30) is between the positive electrode (10) and the negative electrode (20). The positive electrode (10) includes a positive electrode current collector (11) and a positive electrode active material layer (12). The negative electrode (20) includes a negative electrode current collector (21) and a negative electrode active material layer (22). The separator (30) includes a protruding portion (30x) protruding outward past the positive electrode active material layer (12) and the negative electrode active material layer (22). The separator (30) includes a substrate (31) and a ridge portion (32) formed on the substrate (31). The ridge portion (32) is formed like a ridge along at least a part of an edge of the protruding portion (30x).

## Description

### [Technical Field]

The present disclosure relates to a power storage device, a separator for a power storage device, and a method for manufacturing the same.

### [Background Art]

A secondary battery, which is a power storage device, includes a positive electrode, a negative electrode, and a separator. Various proposals have been made on the arrangement of the positive electrode, the negative electrode, and the separator.

Claim 1 of PTL 1 (Japanese Laid-Open Patent Publication No. H07-335246) describes "a battery including: a positive electrode and a negative electrode that are stacked or wound sandwiching a porous film-shaped separator therebetween in a case; and a terminal portion that is fixed to the case and a tab portion or a conductor protruding from an upper end of the positive electrode or the negative electrode, wherein the separator includes an upper edge portion extending further upward than at least a part of the upper end of the positive electrode or the negative electrode, and the upper edge portion of the separator is filled with fine powder having electrically insulating properties."

PTL 2 (Japanese Laid-Open Patent Publication No. 2017-59326) discloses "a secondary battery including a wound group that includes: a positive electrode including positive electrode mixture layers provided on both surfaces of a positive electrode metal foil having long sides and short sides, and a positive electrode metal foil exposed portion formed along a long side of the positive electrode metal foil; and a negative electrode including negative electrode mixture layers provided on both surfaces of a negative electrode metal foil having long sides and short sides, and a negative electrode metal foil exposed portion formed along a long side of the negative electrode metal foil, the positive electrode and the negative electrode being wound in the long side direction with a separator therebetween such that the positive electrode metal foil exposed portion and the negative electrode metal foil exposed portion are respectively arranged on one side and another side in a winding axis direction, wherein the separator is folded so as to face an end surface of the negative electrode metal foil to form a folded portion, and the folded portion is outward of the positive electrode mixture layers in the winding axis direction."

### [Citation List]

### [Patent Literature]

PTL 1: Japanese Laid-Open Patent Publication No. H07-335246
PTL 2: Japanese Laid-Open Patent Publication No. 2017-59326

### [Summary of Invention]

### [Technical Problem]

Under the above circumstances, the present disclosure has an object of providing a power storage device that has high reliability.

### [Solution to Problem]

An aspect of the present disclosure relates to a power storage device. The power storage device is a power storage device including an electrode group that includes a positive electrode, a negative electrode, and a separator, wherein, in the electrode group, the positive electrode, the negative electrode, and the separator are stacked in a stacking direction such that the separator is between the positive electrode and the negative electrode, the positive electrode includes a positive electrode current collector and a positive electrode active material layer disposed on the positive electrode current collector, the negative electrode includes a negative electrode current collector and a negative electrode active material layer disposed on the negative electrode current collector, the separator includes a protruding portion protruding outward past the positive electrode active material layer and the negative electrode active material layer, the separator includes a substrate and a ridge portion formed on the substrate, and the ridge portion is formed like a ridge along at least a part of an edge of the protruding portion.

An aspect of the present disclosure relates to a power storage device. The power storage device is a power storage device including an electrode group that includes a positive electrode, a negative electrode, and a separator, wherein, in the electrode group, the positive electrode, the negative electrode, and the separator are stacked such that the separator is between the positive electrode and the negative electrode, the positive electrode includes a positive electrode current collector and a positive electrode active material layer disposed on the positive electrode current collector, the negative electrode includes a negative electrode current collector and a negative electrode active material layer disposed on the negative electrode current collector, the separator includes a stacked portion in a region sandwiched between the positive electrode active material layer and the negative electrode active material layer and a protruding portion protruding outward past the positive electrode active material layer and the negative electrode active material layer, the stacked portion and the protruding portion include a substrate, the substrate has a positive electrode side surface on the adjacent positive electrode side and a negative electrode side surface on the adjacent negative electrode side, the stacked portion includes the substrate and a first heat resistant layer formed on the positive electrode side surface of the substrate, at least one portion of the protruding portion includes the substrate and a second heat resistant layer formed on the negative electrode side surface of the substrate, a first ridge portion having insulating properties is formed on the positive electrode side surface of the substrate, and the first ridge portion is formed along at least a part of an end portion of the first heat resistant layer on the protruding portion side.

Another aspect of the present disclosure relates to a separator. The separator is a separator for a power storage device, the separator including: a substrate having a first main surface and a second main surface; a first heat resistant layer and a first ridge portion formed on the first main surface; and a second heat resistant layer formed on the second main surface, wherein the separator has at least one band-shaped end region extending along at least one of two opposite sides, and a stacked region other than the end region, the first heat resistant layer is formed on the first main surface of the stacked region, the second heat resistant layer is formed on the second main surface of the end region, and the first ridge portion is formed along at least a part of an end portion of the first heat resistant layer on the end region side.

Another aspect of the present disclosure relates to a method for manufacturing a separator. The method is a method for manufacturing a separator for a power storage device, the separator including a substrate having a first main surface and a second main surface, the separator having at least one band-shaped two end region extending along at least one of two opposite sides and a stacked region other than the end region, the method including: a step (X) of forming a first ridge portion and a first heat resistant layer on the first main surface of the substrate; and a step (Y) of forming a second heat resistant layer on the second main surface of the end region, wherein the step (X) includes: a step (Xa) of forming the first ridge portion on the first main surface in such a manner as to extend in parallel with a boundary between the end region and the stacked region; and a step (Xb) of forming the first heat resistant layer on the first main surface of the stacked region with use of the first ridge portion.

### [Advantageous Effects of Invention]

According to the present disclosure, it is possible to obtain a power storage device that has high reliability.

Although novel features of the present disclosure are described in the appended claims, the following detailed description referring to the drawings will further facilitate the understanding of both the configuration and the content of the present disclosure as well as other objects and features of the present disclosure.

### [Brief Description of Drawings]

[FIG. 1] FIG. 1 is a cross-sectional view schematically showing an example configuration of a power storage device according to Embodiment 1.
[FIG. 2] FIG. 2 is a cross-sectional view schematically showing an example of a part of the power storage device shown in FIG. 1.
[FIG. 3] FIG. 3 is a top view schematically showing an example of a separator used in the power storage device according to Embodiment 1.
[FIG. 4A] FIG. 4A is a top view schematically showing an example of a manufacturing step of the separator according to Embodiment 1.
[FIG. 4B] FIG. 4B is a diagram schematically showing a cross section taken along a line IVB-IVB in FIG. 4A.
[FIG. 5A] FIG. 5A is a top view schematically showing another example of the manufacturing step of the separator according to Embodiment 1.
[FIG. 5B] FIG. 5B is a diagram schematically showing a cross section taken along a line VB-VB in FIG. 5A.
[FIG. 5C] FIG. 5C is a cross-sectional view schematically showing an example of a step subsequent to the step shown in FIG. 5A.
[FIG. 6] FIG. 6 is a cross-sectional view schematically showing a configuration of a battery according to Embodiment 2.
[FIG. 7] FIG. 7 is a cross-sectional view schematically showing a part of FIG. 6.
[FIG. 8] FIG. 8 is a cross-sectional view schematically showing a step of a manufacturing method of the battery according to Embodiment 2.
[FIG. 9A] FIG. 9A is a top view schematically showing a step of an example of a manufacturing method of a separator.
[FIG. 9B] FIG. 9B is a top view schematically showing an example of a separator an example of a step subsequent to the step shown in FIG. 9A.
[FIG. 9C] FIG. 9C is a top view schematically showing an example of a separator an example of a step subsequent to the step shown in FIG. 9B.
[FIG. 9D] FIG. 9D is a diagram schematically showing a cross section taken along a line IVD-IVD in FIG. 9C.
[FIG. 10A] FIG. 10A is a top view schematically showing a step of another example of the manufacturing method of a separator.
[FIG. 10B] FIG. 10B is a diagram schematically showing a cross section taken along a line VB-VB in FIG. 10A.

### [Description of Embodiments]

The following describes embodiments according to the present disclosure referring to examples, but the present disclosure is not limited to the following examples. Specific numerical values and materials may be described below as examples, but other numerical values and other materials may also be applied as long as the invention according to the present disclosure can be implemented. The wording "from numerical value A to numerical value B" as used in this specification means a range including the numerical values A and B and can be read as "the numerical value A or more and the numerical value B or less". When examples of a lower limit and examples of an upper limit of numerical values relating to a specific physical property or condition are given below, any example of the lower limit and any example of the upper limit can be combined suitably unless the lower limit is equal to or higher than the upper limit.

The following describes a first power storage device (D1) and a second power storage device (D2) according to the present embodiment. Matters common to the power storage device (D1) and the power storage device (D2) are described as matters relating to a power storage device (D).

### (Power Storage Device (D1))

Hereinafter, the first power storage device according to the present embodiment may be referred to as the "power storage device (D1)". The following describes the power storage device (D1). The power storage device (D1) includes an electrode group that includes a positive electrode, a negative electrode, and a separator. In the electrode group, the positive electrode, the negative electrode, and the separator are stacked in a stacking direction such that the separator is between the positive electrode and the negative electrode. The positive electrode includes a positive electrode current collector and a positive electrode active material layer disposed on the positive electrode current collector. The negative electrode includes a negative electrode current collector and a negative electrode active material layer disposed on the negative electrode current collector. The separator includes a protruding portion protruding outward past the positive electrode active material layer and the negative electrode active material layer. The separator includes a substrate and a ridge portion formed on the substrate. The ridge portion is formed like a ridge along at least a part of an edge of the protruding portion.

A so-called end surface current collecting structure has been studied as a current collecting structure for obtaining high output. The term "end surface current collecting structure" generally refers to a structure in which an exposed portion of a current collector protrudes from an end surface of an electrode stack (e.g., a wound body) and is welded to a current collecting plate. When the current collector is welded to the current collecting plate, the temperature of the welded portion rises, and therefore, a separator (protruding portion) near the welded portion deteriorates. In order to suppress performance degradation due to deterioration of the separator, the length of a protruding portion of an electrode or the length of the protruding portion of the separator needs to be increased in a conventional power storage device. An increase in the lengths of these protruding portions results in a decrease in the volumes of a positive electrode active material layer and a negative electrode active material layer, leading to a decrease in the battery capacity.

The separator in the power storage device (D1) includes the ridge portion formed in the protruding portion. The part where the ridge portion is formed is thicker than a part that is constituted by the substrate alone. The ridge portion increases the heat capacity of the protruding portion of the separator, and accordingly, the separator is less likely to be affected by a temperature increase in the vicinity of the protruding portion even if the protruding portion is short. Therefore, the protruding portion can be made short, and this makes it possible to increase the capacity of the battery.

In the end surface current collecting structure, sputter (metal microparticles) may be scattered when the current collector is welded to the current collecting plate. If the sputter adheres to active material layers, deterioration of characteristics such as a reduction in the voltage and a reduction in the production yield may occur. In the power storage device (D1), the ridge portion formed in the protruding portion serves like an eave extending from the separator, and metal microparticles can be kept from reaching the active material layers. Therefore, the power storage device (D1) has high reliability. Not only in the end surface current collecting structure described above, but also in the case where an electrode stack and an external terminal such as a sealing plate are connected via a band-shaped metal lead by joining the metal lead and the external terminal through welding or the like, sputter may be scattered from the formed joined portion. It is thought that the above-described ridge portion suppresses adhesion of such sputter to active material layers.

The power storage device (D1) may further include at least one current collecting plate selected from the group consisting of a negative electrode current collecting plate to which the negative electrode current collector is connected and a positive electrode current collecting plate to which the positive electrode current collector is connected. In this case, the ridge portion may be formed in the protruding portion on the at least one current collecting plate side. The power storage device (D1) includes the ridge portion, and therefore, it is possible to reduce the influence of heat applied while the current collector is welded to the current collecting plate, which would otherwise cause deterioration of the separator. The use of the current collecting plate makes it possible to increase a current collecting efficiency and to improve characteristics of the battery.

The power storage device (D1) may include the negative electrode current collecting plate, and the ridge portion may be formed in the protruding portion on the negative electrode current collecting plate side. The power storage device (D1) may include the positive electrode current collecting plate, and the ridge portion may be formed in the protruding portion on the positive electrode current collecting plate side. The power storage device (D1) may include the negative electrode current collecting plate and the positive electrode current collecting plate, and the ridge portion may be formed in both the protruding portion on the negative electrode current collecting plate side and the protruding portion on the positive electrode current collecting plate side.

The substrate may include a substrate layer and a heat resistant layer formed on the substrate layer. By providing the heat resistant layer, it is possible to obtain the power storage device (D1) that has high reliability. The ridge portion may be formed on the substrate layer or on the heat resistant layer. The heat resistant layer may be provided on the positive electrode side or on the negative electrode side.

The ridge portion may be formed on one surface of the substrate or on both surfaces of the substrate. By forming the ridge portion on both surfaces of the substrate, it is possible to particularly increase the heat capacity of the protruding portion.

The electrode group may be a wound body in which the positive electrode, the negative electrode, and the separator are stacked by being wound together. In this case, the positive electrode, the negative electrode, and the separator each have a band shape. In the wound body, the positive electrode, the negative electrode, and the separator are stacked in a radial direction of the wound body. The wound body may be a cylindrical wound body or any other wound body.

When the electrode group is a wound body, the negative electrode current collector may be disposed at the outermost circumferential surface. In this configuration, if a case also serves as a negative electrode terminal, the negative electrode current collector at the outermost circumferential surface comes into contact with an inner surface of the case, and thus a current collecting path can be formed. This configuration can be realized by disposing the negative electrode at the outermost circumferential surface and avoiding forming the negative electrode active material layer in at least a part of the outermost circumferential surface.

The electrode group may also be a stacked body formed by stacking flat positive electrodes, flat negative electrodes, and flat separators in one direction. In this case, the stacking direction of each member (the positive electrode, the negative electrode, the separator) is perpendicular to the flat member. Such a stacked body can be formed by stacking the positive electrodes, the negative electrodes, and the separators such that the positive electrodes and the negative electrodes are alternately arranged and each separator is disposed between a positive electrode and a negative electrode.

The substrate has a first surface that faces the central axis of the wound body and a second surface opposite to the first surface. The ridge portion may be formed such that the mass of the ridge portion on the first surface is larger than the mass of the ridge portion on the second surface. In this configuration, the protruding portion is likely to bend toward the central axis of the wound body. As a result, metal microparticles and the like can be kept from reaching the active material layers. Examples of the configuration in which the ridge portion is formed such that the mass of the ridge portion on the first surface is larger than the mass of the ridge portion on the second surface include two examples. In a first example of the configuration, the ridge portion is formed only on the first surface, and is not formed on the second surface. In a second example of the configuration, the mass of the ridge portion formed on the first surface is larger than the mass of the ridge portion formed on the second surface. In a stacked body formed by alternately stacking a plurality of positive electrode plates and a plurality of negative electrode plates, weights of two ridge portions respectively formed on two surfaces of the substrate may be made uneven to intentionally make the protruding portion of the separator likely to bend in a predetermined direction.

The mass of the ridge portion formed on the first surface may be the same as the mass of the ridge portion formed on the second surface. A configuration is also possible in which the edge side end portion of the ridge portion on the first surface and the edge side end portion of the ridge portion on the second surface in the protruding direction of the protruding portion are joined at a joint portion that is located outward of an end surface of the substrate in the protruding direction of the protruding portion. In this configuration, the end surface of the protruding portion of the substrate exposed from the ridge portions on the first and second surfaces can be covered with the joint portion, and the substrate can be more reliably protected from the influence of heat. The joint portion may be formed of the same material as the ridge portions.

The ridge portion is formed in the protruding portion. The ridge portion may be in contact with the edge of the protruding portion or spaced apart from the edge. The ridge portion is formed in such a manner as to extend in parallel with the edge.

The ridge portion may be located eccentrically toward the edge in the protruding portion. For example, a configuration is also possible in which the ridge portion is not formed in an end portion of the protruding portion on the side (the active material layer side) opposite to the edge of the protruding portion. In this configuration, the center of gravity of the protruding portion of the separator becomes close to the edge, and it becomes easier for the protruding portion of the separator to slant.

### (Method for Manufacturing Power Storage Device (D1))

The following describes an example of a method for manufacturing the power storage device (D1). The manufacturing method may be hereinafter referred to as a "manufacturing method (M1)". The power storage device (D1) may also be manufactured using a manufacturing method other than the manufacturing method (M1) described below. Matters described regarding the power storage device (D1) are applicable to the manufacturing method (M1), and therefore, redundant descriptions thereof may be omitted. Matters described regarding the manufacturing method (M1) may also be applied to the power storage device (D1).

The manufacturing method (M1) is a method for manufacturing a power storage device including an electrode group that includes a positive electrode, a negative electrode, and a separator. The manufacturing method (M1) includes a step (i) of forming the electrode group by stacking the positive electrode, the negative electrode, and the separator such that the separator is between the positive electrode and the negative electrode. The positive electrode includes a positive electrode current collector and a positive electrode active material layer disposed on the positive electrode current collector. The negative electrode includes a negative electrode current collector and a negative electrode active material layer disposed on the negative electrode current collector. A separator (S1) described below can be used as the separator.

There is no particular limitation on the method for stacking the positive electrode, the negative electrode, and the separator, and a known method may be used. For example, it is possible to stack the positive electrode, the negative electrode, and the separator by winding the positive electrode, the negative electrode, and the separator together in the step (i). Alternatively, it is possible to form a stacked body by stacking a plurality of flat plate-shaped positive electrodes, a plurality of flat plate-shaped negative electrodes, and sheet-shaped separators in one direction.

In the step (i), the electrode group is formed such that a portion of the separator forms a protruding portion protruding outward past the positive electrode active material layer and the negative electrode active material layer. The protruding amount of the protruding portion can be changed by changing the size of the separator.

There is no limitation on methods for forming the positive electrode and the negative electrode, and known methods may be used. It is possible to form the positive electrode by, for example, applying a positive electrode slurry for forming the positive electrode active material layer to the positive electrode current collector, and then performing drying and rolling. It is possible to form the negative electrode by, for example, applying a negative electrode slurry for forming the negative electrode active material layer to the negative electrode current collector, and then performing drying and rolling.

The manufacturing method (M1) may also include a step (ii) of connecting at least one current collector selected from the group consisting of the positive electrode current collector and the negative electrode current collector to a current collecting plate. The positive electrode current collector is connected to a positive electrode current collecting plate. The negative electrode current collector is connected to a negative electrode current collecting plate. The current collector can be connected through welding or the like. There is no particular limitation on the welding method, and a known method may be used. For example, it is possible to use laser welding, arc welding (e.g., TIG welding), resistance welding, or other welding methods. If the ridge portion is formed in the protruding portion on the current collecting plate side, it is possible to reduce the influence of heat applied during welding and suppress adhesion of sputter to the active material layers.

There is no particular limitation on steps after the above step, and the power storage device (D1) may be manufactured using a known method. For example, the positive electrode may be electrically connected to a positive electrode terminal, the negative electrode may be electrically connected to a negative electrode terminal (e.g., an exterior body), and the electrode group and a nonaqueous electrolyte may be enclosed in the exterior body.

### (Separator)

The separator used in the power storage device (D1) may be hereinafter referred to as a "separator (S1)". Matters described regarding the separator in the power storage device (D1) are applicable to the separator (S1), and therefore, redundant descriptions thereof may be omitted. Matters described regarding the separator (S1) may also be applied to the separator in the power storage device (D1).

The separator (S1) includes a pair of edges opposite to each other. Portions of the separator including the pair of edges each correspond to the protruding portion described above. The separator (S1) includes ridge portions formed like ridges along at least a part of the edges.

The substrate of the separator (S1) may be constituted by a substrate layer alone. Alternatively, the substrate of the separator (S1) may include a substrate layer and a heat resistant layer formed on the substrate layer.

There is no particular limitation on the substrate layer, and a known substrate layer that is used as a substrate layer of a separator in a lithium ion secondary battery may be used. A microporous film, woven fabric, nonwoven fabric, or the like can be used as the substrate layer. Examples of the material of the substrate layer include resins such as polyolefins (polypropylene, polyethylene, etc.). The thickness of the substrate layer may be within a range from 5 µm to 25 µm (from 10 µm to 20 µm), or may be within a range other than this range. The substrate layer has a rectangular planar shape.

The heat resistant layer has higher heat resistance than the substrate layer. It is possible to make the heat resistance of the heat resistant layer higher than the heat resistance of the substrate layer by using a resin that has higher heat resistance (e.g., a resin that has a higher melting point or a higher softening point) than the resin forming the substrate layer, as the resin forming the heat resistant layer. The heat resistant layer may be formed of the resin or may include the resin and an inorganic filler.

Examples of the resin having high heat resistance and used for the heat resistant layer include aramid resins. Examples of the inorganic filler used in the heat resistant layer include inorganic particles of aluminum oxide (alumina, Boehmite), magnesium oxide, titanium oxide (titania), zirconium oxide, and silicon oxide (silica). The heat resistance of the heat resistant layer can be increased by including an inorganic filler in the heat resistant layer.

A preferable example of the separator includes the substrate layer that is a microporous film of a polyolefin resin (polypropylene, polyethylene, etc.) and the heat resistant layer containing an aramid resin. In this case, the heat resistant layer may contain the aramid resin and an inorganic filler (e.g., alumina particles). Alternatively, the heat resistant layer may also be constituted by an inorganic filler alone.

### (Ridge Portion)

The ridge portion is a linearly extending protrusion. For example, the ridge portion extends in such a manner as to have a longitudinal direction in a predetermined direction. The predetermined direction is perpendicular to the stacking direction of the positive electrode plate and the negative electrode plate and also perpendicular to the direction in which the protruding portions of the separator protrude. The ridge portion may contain a resin or inorganic particles having insulating properties, or contain both a resin and inorganic particles. There is no particular limitation on the resin and the inorganic particles. A resin having insulating properties can be used. A resin having higher heat resistance than the resin contained in the substrate may be used as the resin contained in the ridge portion. Examples of the resin having high heat resistance include the resins listed as examples of the resin used for the heat resistant layer.

Examples of the resin having insulating properties include polyolefin resin, acrylic resin, polyamide resin, polyimide resin, silicone resin, fluorocarbon resin, urethane resin, melamine resin, and urea resin. It is also possible to use a cured product of a curable resin such as epoxy resin as the resin having insulating properties.

Examples of the inorganic particles having insulating properties include inorganic particles of metal oxides having insulating properties. Examples of the metal oxides having insulating properties include aluminum oxide (alumina, Boehmite), magnesium oxide, titanium oxide (titania), zirconium oxide, and silicon oxide (silica).

There is no particular limitation on the cross-sectional shape of the ridge portion, and the cross-sectional shape may be a rectangular shape, a trapezoidal shape, or a semicircular shape.

The height Hr and the width Wr of the ridge portion are selected according to the size and the structure of the power storage device (D1) such that the effects of the ridge portion can be obtained. The larger the height Hr and the width Wr are, the higher the heat capacity of the ridge portion can be made.

The ridge portion may be formed continuously. Alternatively, the ridge portion may be formed discontinuously. A ratio Lr/Ls of the total length Lr of the ridge portion formed in a protruding portion (length in the direction in which an edge of the protruding portion extends) to the length Ls of the edge of the protruding portion in which the ridge portion is formed may be 0.7 or more, 0.8 or more, or 0.9 or more, and is 1.0 or less. The ridge portion may also be formed along the entire edge of the protruding portion. In this case, the ratio Lr/Ls is 1.0.

### (Method for Manufacturing Separator (S1))

The separator (S1) can be manufactured by forming the ridge portion on the substrate. It is also possible to manufacture a plurality of separators (S1) by forming a plurality of ridge portions on a large substrate and cutting the substrate into a predetermined size. When the substrate includes the substrate layer and the heat resistant layer, the substrate can be formed by forming the heat resistant layer on the substrate layer.

There is no particular limitation on methods for forming the ridge portion and the heat resistant layer, and known methods may be used. For example, the material of the ridge portion (or the material of the heat resistant layer) may be applied to a predetermined position, and then the material may be cured through drying, heating, or the like. The material may be applied using a dispenser, screen printing, or the like. Alternatively, the ridge portion may be formed by affixing a piece of thin tape of resin having insulating properties to the substrate.

### (Power Storage Device (D2))

Hereinafter, the second power storage device according to the present embodiment may be referred to as the "power storage device (D2)". The following describes the power storage device (D2). The power storage device (D2) includes an electrode group that includes a positive electrode, a negative electrode, and a separator. In the electrode group, the positive electrode, the negative electrode, and the separator are stacked such that the separator is between the positive electrode and the negative electrode. The positive electrode includes a positive electrode current collector and a positive electrode active material layer disposed on the positive electrode current collector. The negative electrode includes a negative electrode current collector and a negative electrode active material layer disposed on the negative electrode current collector. The separator includes a stacked portion in a region sandwiched between the positive electrode active material layer and the negative electrode active material layer and a protruding portion protruding outward past the positive electrode active material layer and the negative electrode active material layer. The stacked portion and the protruding portion include a substrate (substrate layer). The substrate has a positive electrode side surface on the adjacent positive electrode side and a negative electrode side surface on the adjacent negative electrode side. The stacked portion includes the substrate and a first heat resistant layer formed on the positive electrode side surface of the substrate. At least one portion of the protruding portion includes the substrate and a second heat resistant layer formed on the negative electrode side surface of the substrate. A first ridge portion having insulating properties is formed on the positive electrode side surface of the substrate. The first ridge portion is formed along at least a part of an end portion of the first heat resistant layer on the protruding portion side.

The at least one portion of the protruding portion can form a curled portion that is curled with the second heat resistant layer facing outward. The first ridge portion is formed along at least a part of an end portion of the first heat resistant layer on the curled portion side.

Note that the heat resistant layers have higher heat resistance than the substrate of the separator. When the separator is heated, the amount of thermal contraction of the heat resistant layers is smaller than the amount of thermal contraction of the substrate.

In the power storage device (D2), the curled portion can be formed in the protruding portion of the separator. The curled portion makes it possible to keep metal microparticles (sputter and the like) from reaching the inside of the electrode group (e.g., the active material layers).

The so-called end surface current collecting structure has been studied as a current collecting structure for obtaining high output. The term "end surface current collecting structure" generally refers to a structure in which an exposed portion of a current collector protrudes from an end surface of an electrode stack (e.g., a wound body) and is welded to a current collecting plate. In the end surface current collecting structure, sputter (metal microparticles) may be scattered when the current collector is welded to the current collecting plate.

If the sputter adheres to the inside of the electrode group, deterioration of the characteristics such as a reduction in the voltage and a reduction in the production yield may occur. For example, assume a case where a copper foil is used as the current collector and a power storage device having the end surface current collecting structure is manufactured. In this case, sputter containing copper (copper microparticles) may be scattered when the copper foil is welded to the current collecting plate. If the scattered copper microparticles adhere to the positive electrode active material layer, the copper is ionized during charging and discharging, for example, and further deposited on the negative electrode active material layer. If the copper deposited on the negative electrode active material layer grows dendritically, this may cause a micro short circuit between the positive electrode and the negative electrode. The micro short circuit may cause deterioration of the characteristics such as a reduction in the voltage (e.g., the battery voltage). The curled portion of the power storage device (D2) keeps metal microparticles from reaching the inside of the electrode group. Therefore, deterioration of the characteristics of the power storage device (D2) can be suppressed. Moreover, the production yield of the power storage device (D2) and the reliability of the manufactured power storage device (D2) can be improved.

Note that the sputter generated during welding may be scattered during welding, but in some cases, remains in the vicinity of the welded portion during welding and moves with the passage of time. In the power storage device (D2), it is also possible to keep the sputter from moving to the inside of the electrode group with the passage of time.

The structure described in PTL 1 in which the separator is folded is realized based on the positional relationship between the separator and members other than the separator, and is not formed by the separator alone. Accordingly, the structure described in PTL 1 in which the separator is folded is affected by expansion and contraction of the electrodes accompanying charging and discharging. In contrast, the curled portion of the power storage device (D2) can be formed independently of shapes and configurations of the other members. Accordingly, the curled portion of the power storage device (D2) is unlikely to be affected by expansion and contraction of the electrodes accompanying charging and discharging.

The curled portion may be formed in the entire region of the protruding portion or only in a part of the protruding portion.

The second heat resistant layer is formed on the negative electrode side surface. This configuration makes it possible to bend the curled portion toward the positive electrode. If metal microparticles adhere to the positive electrode active material layer, a micro short circuit is likely to occur due to ionization and deposition of the metal microparticles. Accordingly, in order to suppress adhesion of metal microparticles to the positive electrode active material layer, it is preferable that the curled portion is bent toward the positive electrode adjacent to the protruding portion.

The first heat resistant layer is formed in the region of the positive electrode side surface of the substrate facing the positive electrode active material layer. By forming the first heat resistant layer, it is possible to suppress contraction of the separator even when the temperature of the power storage device (D2) rises. Accordingly, it is possible to improve the heat resistance of the power storage device (D2) by forming the first heat resistant layer. The first ridge portion facilitates the formation of the first heat resistant layer in the predetermined region. The first heat resistant layer is preferably formed so as to face the entire surface of the adjacent positive electrode active material layer.

A heat resistant layer may be formed on the negative electrode side surface of the substrate in the stacked portion, but a configuration is also possible in which no heat resistant layer is formed on the negative electrode side surface of the substrate in the stacked portion. In order to make it easy to curl the curled portion, a heat resistant layer is usually not formed on the positive electrode side surface of the substrate in an end region. However, as long as the curled portion can be formed with no problem, a heat resistant layer may also be formed on a part of or the entirety of the positive electrode side surface of the substrate in the end region.

The power storage device (D2) may further include a negative electrode current collecting plate. In this case, the negative electrode current collector may be welded to the negative electrode current collecting plate. In this case, it is preferable that the protruding portion on the negative electrode current collecting plate side includes the curled portion. This configuration makes it possible to keep sputter generated when the negative electrode current collector is welded to the negative electrode current collecting plate from reaching the inside of the electrode group. Also, it is possible to curl the curled portion when the negative electrode current collector is welded to the negative electrode current collecting plate as described later.

When a metal foil containing copper is used as the negative electrode current collector, sputter containing copper is generated during welding. If the sputter containing copper adheres to the positive electrode active material layer, the copper is ionized and then deposited on the negative electrode active material layer, and a micro short circuit is likely to occur. Therefore, it is preferable that the protruding portion on the negative electrode current collecting plate side includes the curled portion.

The distance between the negative electrode and the negative electrode current collecting plate may be shorter than the distance between the positive electrode and the negative electrode current collecting plate.

The power storage device (D2) may further include a positive electrode current collecting plate, and the positive electrode current collector may be welded to the positive electrode current collecting plate. The separator may include the protruding portion including the curled portion on the positive electrode current collecting plate side. At this time, the curled portion on the positive electrode current collecting plate side may be bent toward the negative electrode with the second heat resistant layer facing outward. The separator may include the protruding portion including the curled portion on both the negative electrode current collecting plate side and the positive electrode current collecting plate side. This configuration makes it possible to keep metal microparticles from reaching the inside of the electrode group particularly effectively. Note that either one of the positive electrode and the negative electrode may collect a current using a known structure other than the end surface current collecting structure. In this specification, the positive electrode current collecting plate side and the negative electrode current collecting plate side may be read as an opening side of a cylindrical case having a bottom and the bottom side of the case. However, the positive electrode of the power storage device according to the present disclosure may be electrically connected to the case and the negative electrode of the power storage device may be electrically connected to a sealing plate. If the positive electrode current collector is not welded to the positive electrode current collecting plate, it is possible to form an uncoated portion in which the positive electrode active material layer is not formed in the positive electrode current collector, connect a band-shaped metal lead to the uncoated portion, and join an end portion of the lead opposite to its end portion connected to the positive electrode to the sealing plate. This lead may also be joined to the positive electrode current collector.

The separator may include a first separator and a second separator disposed in such a manner as to sandwich the positive electrode therebetween. The curled portion may include a first curled portion of the first separator and a second curled portion of the second separator. Alternatively, the curled portion may be formed only in the first separator or only in the second separator.

The positive electrode, the negative electrode, and the separator are stacked in a stacking direction. In the electrode group, the positive electrode, the negative electrode, and the separator may be stacked by being wound together. That is to say, the electrode group may be a wound body. In this case, the positive electrode, the negative electrode, and the separator each have a band shape. In the wound body, the positive electrode, the negative electrode, and the separator are stacked in a radial direction of the wound body. That is to say, the stacking direction of each member (the positive electrode, the negative electrode, the separator) in the wound body is the radial direction of the wound body. The wound body may be a cylindrical wound body or any other wound body.

When the electrode group is a wound body, the negative electrode current collector may be disposed at the outermost circumferential surface. In this configuration, if a case also serves as a negative electrode terminal, the negative electrode current collector at the outermost circumferential surface comes into contact with an inner surface of the case, and thus a current collecting path can be formed. This configuration can be realized by disposing the negative electrode at the outermost circumferential surface and avoiding forming the negative electrode active material layer in at least a part of the outermost circumferential surface.

The electrode group may also be a stacked body obtained by stacking a plurality of flat plate-shaped positive electrodes, a plurality of flat plate-shaped negative electrodes, and sheet-shaped separators. In this case, the stacking direction of each member (the positive electrode, the negative electrode, the separator) is perpendicular to the flat plate-shaped member. Such a stacked body can be formed by stacking the positive electrodes, the negative electrodes, and the separators such that the positive electrodes and the negative electrodes are alternately arranged and each separator is disposed between a positive electrode and a negative electrode. In such a stacked electrode group, the positions of the plurality of positive electrodes may be shifted from the positions of the plurality of negative electrodes in a direction perpendicular to the stacking direction.

When the end surface current collecting structure is adopted, a current collector is bent to be connected to a current collecting plate. In this case, the protruding portion of the separator may be bent together with the current collector. For example, the protruding portion including the curled portion may be bent together with the current collector. These configurations make it possible to keep metal microparticles from entering the inside of the electrode group particularly effectively. This configuration can be realized by increasing the protruding length of the protruding portion. The protruding length of the protruding portion can be increased by increasing the width of the separator.

### (First Ridge Portion)

The first ridge portion is a linearly extending protrusion. The first ridge portion keeps the first heat resistant layer formed on the substrate of the separator from spreading to a region (e.g., the protruding portion) outward of the first ridge portion on the substrate. The first ridge portion may contain a resin or inorganic particles having insulating properties, or contain both a resin and inorganic particles. There is no particular limitation on the resin and the inorganic particles. A resin having insulating properties can be used. A resin having higher heat resistance than the resin contained in the substrate may be used as the resin contained in the first ridge portion.

Examples of the resin having insulating properties include polyolefin resin, acrylic resin, polyamide resin, polyimide resin, silicone resin, fluorocarbon resin, urethane resin, melamine resin, and urea resin. It is also possible to use a cured product of a curable resin such as epoxy resin as the resin having insulating properties. A resin through which lithium ions are unlikely to permeate may be used as the resin having insulating properties. Examples of the resin through which lithium ions are unlikely to permeate include polyimide, polyvinylidene fluoride, and an acrylonitrile-acrylic ester copolymer.

Examples of the inorganic particles having insulating properties include inorganic particles of metal oxides having insulating properties. Examples of the metal oxides having insulating properties include aluminum oxide (alumina, Boehmite), magnesium oxide, titanium oxide (titania), zirconium oxide, and silicon oxide (silica).

The height H1r of the first ridge portion may be larger than the thickness T1t of the first heat resistant layer. This configuration makes it easier to reliably form the first heat resistant layer in the predetermined region. The height H1r of the first ridge portion may be equal to or smaller than the thickness T1t of the first heat resistant layer. This configuration makes it easier to form the first ridge portion. Even if the height of the first ridge portion is smaller than the thickness of the first heat resistant layer, it is possible to obtain the function of a stopper for the first heat resistant layer, compared with a separator that does not include the first ridge portion. A ratio H1r/H1t of the height H1r to the thickness T1t may be 0.3 or more, 0.5 or more, or 0.7 or more, and may be 2.0 or less, or 1.5 or less.

The width of the first ridge portion is not particularly limited, and is only required not to significantly hinder the functions of the curled portion and the first heat resistant layer. The width of the first ridge portion may be 20 µm or more, or 25 µm or more, and may be 40 µm or less, or 35 µm or less.

The first ridge portion may be formed continuously. Alternatively, the first ridge portion may be formed discontinuously.

### (Second Ridge Portion)

A second ridge portion having insulating properties may be formed on the negative electrode side surface of the substrate. The second ridge portion is formed along at least a part of an end portion of the second heat resistant layer on the stacked portion side.

The second ridge portion is a linearly extending protrusion. The second ridge portion keeps the second heat resistant layer formed on the substrate from spreading to a region (e.g., the stacked portion) inward of the first ridge portion on the substrate. The second ridge portion may contain a resin or inorganic particles having insulating properties, or contain both a resin and inorganic particles. There is no particular limitation on the resin and the inorganic particles. It is possible to use the materials described as the materials of the first ridge portion as the resin and the inorganic particles. A resin having higher heat resistance than the resin contained in the substrate may be used as the resin contained in the second ridge portion.

The height H2r of the second ridge portion may be larger than the thickness T2t of the second heat resistant layer. This configuration makes it easier to reliably form the second heat resistant layer in the predetermined region. The height H2r of the second ridge portion may be equal to or smaller than the thickness T2t of the second heat resistant layer. This configuration makes it easier to form the second ridge portion. A ratio H2r/H2t of the height H2r to the thickness T2t may be 0.3 or more, 0.5 or more, or 0.7 or more, and may be 3.0 or less, 2.0 or less, or 1.5 or less.

The width of the second ridge portion is not particularly limited, and is only required not to significantly hinder the function of the curled portion. The width of the second ridge portion may be 20 µm or more, or 25 µm or more, and may be 40 µm or less, or 35 µm or less.

The second ridge portion may be formed continuously. Alternatively, the second ridge portion may be formed discontinuously.

### (Method for Manufacturing Power Storage Device)

The following describes a manufacturing method according to the present embodiment. The manufacturing method may be hereinafter referred to as a "manufacturing method (M2)". The power storage device (D2) can be manufactured using the manufacturing method. However, the power storage device (D2) may also be manufactured using a manufacturing method other than the manufacturing method described below. Matters described regarding the power storage device (D2) are applicable to the manufacturing method (M2), and therefore, redundant descriptions thereof may be omitted. Matters described regarding the manufacturing method (M2) may also be applied to the power storage device (D2).

The manufacturing method (M2) is a method for manufacturing a power storage device including an electrode group that includes a positive electrode, a negative electrode, and a separator. The manufacturing method (M2) includes steps (i) and (ii) in this order. The following describes these steps.

### (Step (i))

The step (i) is a step of forming the electrode group by stacking the positive electrode, the negative electrode, and the separator such that the separator is between the positive electrode and the negative electrode. The positive electrode includes a positive electrode current collector and a positive electrode active material layer disposed on the positive electrode current collector. The negative electrode includes a negative electrode current collector and a negative electrode active material layer disposed on the negative electrode current collector. A separator (S2) described below can be used as the separator.

There is no particular limitation on the method for stacking the positive electrode, the negative electrode, and the separator, and a known method may be used. For example, it is possible to stack the positive electrode, the negative electrode, and the separator by winding the positive electrode, the negative electrode, and the separator together in the step (i). Alternatively, it is possible to form a stacked body by stacking a plurality of flat plate-shaped positive electrodes, a plurality of flat plate-shaped negative electrodes, and sheet-shaped separators in one direction.

In the step (i), the electrode group is formed such that a portion of the separator forms a protruding portion protruding outward past the positive electrode active material layer and the negative electrode active material layer. The protruding amount of the protruding portion can be changed by changing the size of the separator. The above-described separator prior to the curled portion being curled can be used as the separator. The separator is disposed such that the first heat resistant layer faces the adjacent positive electrode and the second heat resistant layer faces the adjacent negative electrode. An example of a method for forming the separator will be described later.

There is no limitation on methods for forming the positive electrode and the negative electrode, and known methods may be used. It is possible to form the positive electrode by, for example, applying a positive electrode slurry for forming the positive electrode active material layer to the positive electrode current collector, and then performing drying and rolling. It is possible to form the negative electrode by, for example, applying a negative electrode slurry for forming the negative electrode active material layer to the negative electrode current collector, and then performing drying and rolling.

### (Step (ii))

The step (ii) is a step of curling at least a part of the curled portion by heating at least a part of the protruding portion. The step (ii) may also be carried out by heating a part of the electrode group.

The protruding portion includes the substrate and the second heat resistant layer having higher heat resistance than the substrate. When the protruding portion is heated, the amount of thermal contraction of the substrate is larger than the amount of thermal contraction of the second heat resistant layer. Accordingly, when the protruding portion on which the second heat resistant layer has been formed is heated, the substrate contracts more than the second heat resistant layer due to heat, and the protruding portion curls toward the side on which the second heat resistant layer has not been formed. Thus, the curled portion of the protruding portion is curled.

The manufacturing method may further include a welding step of welding the negative electrode current collector to the negative electrode current collecting plate after the step (i). Also, the manufacturing method (M2) may include a welding step of welding the positive electrode current collector to the positive electrode current collecting plate after the step (i). There is no particular limitation on the welding method, and a known method may be used. For example, it is possible to use laser welding, arc welding (e.g., TIG welding), or other welding methods.

In the manufacturing method (M2), the step (ii) may also be carried out using heat generated in the welding step. This configuration makes it possible to curl the curled portion near the welded portion particularly effectively. Accordingly, it is possible to obtain a high effect against sputter generated during welding.

Heating in the step (ii) may also be carried out before the welding step. Alternatively, the step (ii) may be further carried out after the welding step. In these cases, there is no particular limitation on the heating method, and a heater or the like may be used for heating, for example. Heating is performed at a temperature that causes little damage to the separator and is higher than or equal to a temperature at which thermal contraction of the substrate occurs. Heating conditions can be selected according to the types of the substrate and the heat resistant layers.

There is no particular limitation on steps after the step (ii), and the power storage device may be manufactured using a known method. For example, the positive electrode may be electrically connected to a positive electrode terminal, the negative electrode may be electrically connected to a negative electrode terminal (e.g., an exterior body), and the electrode group and an electrolyte may be enclosed in the exterior body.

### (Separator)

The separator according to the present embodiment may be hereinafter referred to as a "separator (S2)". The separator (S2) can be used as the separator in the power storage device (D2) described above. Matters described regarding the separator in the power storage device (D2) are applicable to the separator (S2), and therefore, redundant descriptions thereof may be omitted. Matters described regarding the separator (S2) may also be applied to the separator in the power storage device (D2).

The separator (S2) is a separator for a power storage device. The separator (S2) includes a substrate having a first main surface and a second main surface, a first heat resistant layer and a first ridge portion formed on the first main surface, and a second heat resistant layer formed on the second main surface. The separator (S2) has at least one band-shaped end region extending along at least one of two opposite sides (e.g., long sides) and a stacked region other than the end region. The first heat resistant layer is formed on the first main surface of the stacked region. The second heat resistant layer is formed on the second main surface of the end region. The first ridge portion is formed along at least a part of an end portion of the first heat resistant layer on the end region side.

The first main surface serves as the positive electrode side surface described above. The second main surface serves as the negative electrode side surface described above. The end region corresponds to the protruding portion described above. At least a part of the end region constitutes the curled portion described above. However, usually, the end region of the separator (S2) is substantially not curled. It is possible to curl at least a part of the end region after a stacked body (electrode group) is formed with use of the separator (S2). The stacked region constitutes the stacked portion described above. The substrate, the heat resistant layers, and the ridge portion are described above, and therefore, redundant descriptions thereof are omitted.

The separator (S2) may further include a second ridge portion that is formed on the second main surface along at least a part of an end portion of the second heat resistant layer on the stacked region side.

The separator (S2) may have two end regions respectively extending along the two opposite sides. In this case, the first ridge portion may be formed along each of two end portions of the first heat resistant layer on the sides of the two end regions.

The first heat resistant layer and the second heat resistant layer each usually have a band shape extending in parallel with the two opposite sides described above. The area of the first heat resistant layer may be 80% or more, or 90% or more of the area of the stacked region. The area of the second heat resistant layer may be 80% or more, or 90% or more of the area of the end region.

### (Method for Manufacturing Separator)

A method for manufacturing the separator according to the present embodiment may be hereinafter referred to as a "manufacturing method (m2)". The separator (S2) can be manufactured using the manufacturing method (m2). However, the separator (S2) may also be manufactured using a manufacturing method other than the manufacturing method described below. Matters described regarding the separator in the power storage device (D2) and the separator (S2) are applicable to the manufacturing method (m2), and therefore, redundant descriptions thereof may be omitted. Matters described regarding the manufacturing method (m2) may also be applied to the separator in the power storage device (D2) and the separator (S2).

The manufacturing method (m2) is a method for manufacturing a separator for a power storage device including a substrate having a first main surface and a second main surface. The separator (or the substrate) has at least one band-shaped two end region extending along at least one of two opposite sides and a stacked region other than the end region. The manufacturing method (m2) includes: a step (X) of forming a first ridge portion and a first heat resistant layer on the first main surface of the substrate; and a step (Y) of forming a second heat resistant layer on the second main surface of the end region.

The step (X) includes: a step (Xa) of forming the first ridge portion on the first main surface in such a manner as to extend in parallel with a boundary between the end region and the stacked region; and a step (Xb) of forming the first heat resistant layer on the first main surface of the stacked region with use of the first ridge portion.

There is no limitation on the order of the steps (X) and (Y). The step (Y) may be carried out after the step (X), or the step (Y) may be carried out before the step (X). Alternatively, a part of one step or the whole step may also be carried out during the other step. For example, it is possible to form the second heat resistant layer after the first ridge portion is formed, and thereafter form the first heat resistant layer.

The step (Y) may include: a step (Ya) of forming a second ridge portion on the second main surface along the boundary; and a step (Yb) of forming the second heat resistant layer on the second main surface of the end region with use of the second ridge portion.

There is no particular limitation on methods for forming the first and second ridge portions and the first and second heat resistant layers, and known methods may be used. For example, materials of the ridge portions (or materials of the heat resistant layers) may be applied to predetermined positions, and then the materials may be cured through drying, heating, or the like. The materials may be applied using a dispenser, screen printing, or the like.

The first heat resistant layer is formed after the first ridge portion is formed, and accordingly, the first heat resistant layer can be kept from being formed in the curled portion. This makes it possible to stably curl the curled portion. If the first ridge portion is not formed, the material of the first heat resistant layer may not be sufficiently applied in order to prevent the formation of the first heat resistant layer in the curled portion. In such a case, the first heat resistant layer may not be sufficiently formed in the desired region, and the heat resisting effect may degrade. However, if the first ridge portion is formed beforehand, the first ridge portion can be used as a stopper for the material of the first heat resistant layer and a sufficient amount of the material of the first heat resistant layer can be applied. This makes it possible to obtain a separator having high heat resistance. Likewise, if the second ridge portion is formed beforehand, the second ridge portion can be used as a stopper for the material of the second heat resistant layer and the second heat resistant layer can be easily formed at a predetermined position.

Note that the ridge portions may be formed discontinuously as long as the heat resistant layers can be formed at predetermined positions. The materials of the heat resistant layers have a certain degree of viscosity, and accordingly, even if the ridge portions are formed discontinuously, the heat resistant layers can be formed in the predetermined regions. Also, the heights of the ridge portions may be lower than the heights of the heat resistant layers as long as the heat resistant layers can be formed at the predetermined positions.

### (Example Configuration of Power Storage Device (D))

The following describes an example configuration of the power storage device (D) (the power storage devices (D1) and (D2). However, the configurations of the power storage devices (D1) and (D2) are not limited to the following example.

Examples of the power storage device (D) include a secondary battery and a capacitor. Examples of the secondary battery include a nonaqueous electrolyte secondary battery and other secondary batteries. Examples of the nonaqueous electrolyte secondary battery include a lithium ion secondary battery. Examples of the capacitor include a lithium ion capacitor.

The power storage device (D) includes a positive electrode (positive electrode plate), a negative electrode (negative electrode plate), and a separator, and usually further includes an electrolyte and an exterior body. These are selected according to the type of the power storage device (D). Known configurations may be applied to configurations that are not described above regarding the power storage device (D). The following describes an example configuration of the power storage device (D) that is a lithium ion secondary battery. If the power storage device (D) is not a lithium ion secondary battery, each member is selected according to the type of the power storage device (D).

### (Positive Electrode)

The positive electrode includes a positive electrode current collector and a positive electrode active material layer formed on one surface or both surfaces of the positive electrode current collector. A metal foil such as an aluminum foil or an aluminum alloy foil can be used as the positive electrode current collector. The thickness of the positive electrode current collector may be within a range from 5 µm to 300 µm (e.g., from 140 µm to 210 µm), or may be within a range other than this range. The positive electrode active material layer contains a positive electrode active material and also contains other additives (a conductive agent, a binder, etc.) as necessary. Examples of the positive electrode active material include a lithium-containing transition metal oxide.

### (Negative Electrode)

The negative electrode includes a negative electrode current collector and a negative electrode active material layer formed on one surface or both surfaces of the negative electrode current collector. A metal foil such as a copper foil or a copper alloy foil can be used as the negative electrode current collector. The thickness of the negative electrode current collector may be within a range from 5 µm to 300 µm (e.g., from 150 µm to 210 µm), or may be within a range other than this range. The negative electrode active material layer contains a negative electrode active material and also contains other additives (a conductive agent, a binder, etc.) as necessary. Examples of the negative electrode active material include a carbonaceous material (e.g., graphite).

### (Positive Electrode Current Collecting Plate and Negative Electrode Current Collecting Plate)

There is no particular limitation on the positive electrode current collecting plate and the negative electrode current collecting plate, and known current collecting plates may be used. For example, it is possible to use, as the positive electrode current collecting plate and the negative electrode current collecting plate, an aluminum plate and a copper plate, or metal plates on which a predetermined metal coating layer (e.g., plated layer) has been formed. The metal coating layer may be a nickel-plated layer. A nickel-plated iron plate or a nickel-plated copper plate may be used as a current collecting plate.

When a metal foil containing copper is used as the negative electrode current collector, sputter containing copper is generated during welding. If the sputter containing copper adheres to the positive electrode active material layer, the copper is ionized and then deposited on the negative electrode active material layer, and a micro short circuit is likely to occur. Therefore, it is preferable that a ridge portion is formed in the protruding portion on the negative electrode current collecting plate side.

### (Separator (S1))

The separator described as the separator in the power storage device (D1) can be used as the separator (S1) in the power storage device (D1).

### (Separator (S2))

As described above, the separator (S2) in the power storage device (D2) includes the substrate, and the heat resistant layers and the ridge portion formed in the predetermined portions of the substrate.

There is no particular limitation on the substrate, and a known substrate that is used as a substrate of a separator in a lithium ion secondary battery may be used. A microporous film, woven fabric, nonwoven fabric, or the like can be used as the substrate. Examples of the material of the substrate include resins such as polyolefins (polypropylene, polyethylene, etc.). The thickness of the substrate may be within a range from 5 µm to 25 µm (from 10 µm to 20 µm), or may be within a range other than this range. The substrate has a rectangular planar shape.

The heat resistant layers have higher heat resistance than the substrate. It is possible to make the heat resistance of the heat resistant layers higher than the heat resistance of the substrate by using a resin that has higher heat resistance (e.g., a resin that has a higher melting point or a higher softening point) than the resin forming the substrate, as the resin forming the heat resistant layers. The heat resistant layers may be formed of the resin or may include the resin and an inorganic filler.

Examples of the resin having high heat resistance and used for the heat resistant layers include aramid resins. Examples of the inorganic filler used in the heat resistant layers include inorganic particles of alumina, silica, titania, and the like. The heat resistance of the heat resistant layers can be increased by including an inorganic filler in the heat resistant layers.

The composition of the second heat resistant layer formed in the protruding portion and the composition of the first heat resistant layer disposed between the positive electrode active material layer and the negative electrode active material layer may be the same as each other or different from each other. The thickness of the second heat resistant layer may be within a range from 2 µm to 10 µm (e.g., from 2 µm to 5 µm). If the thickness is within this range, the curled portion is likely to be particularly curled. The thickness of the first heat resistant layer may be within a range from 2 µm to 10 µm (e.g., from 2 µm to 5 µm). If the thickness is within this range, it is possible to improve the heat resistance of the power storage device (D2) and maintain the charge capacity of the power storage device (D2) in a well-balanced manner. Note that the heat resistant layers may have thicknesses outside the ranges described here as examples.

A preferable example of the separator (S2) includes the substrate that is a microporous film of a polyolefin resin (polypropylene, polyethylene, etc.) and the heat resistant layers containing an aramid resin. In this case, the heat resistant layers may contain the aramid resin and an inorganic filler (e.g., alumina particles). Alternatively, a configuration is also possible in which the heat resistant layers do not contain an aramid resin, and are constituted by an inorganic filler alone.

### (Other Configurations)

There is no particular limitation on the electrolyte, and the electrolyte is selected according to the type of the power storage device (D). For example, when the power storage device is a lithium ion secondary battery, a known nonaqueous electrolyte used in a lithium ion secondary battery may be used as the electrolyte. An example of the nonaqueous electrolyte has lithium ion conductivity and contains a lithium salt and a nonaqueous solvent in which the lithium salt dissolves. There is no particular limitation on the exterior body, and a known exterior body that is used for a lithium ion secondary battery may be used.

The following specifically describes examples of the power storage device (D1) and the manufacturing method (M1) according to the present disclosure with reference to the drawings. The constituent elements described above can be applied to constituent elements of the following examples. The following examples can be modified based on the above description. Matters described below may also be applied to the above embodiments. In the following examples, matters that are not essential to the power storage device (D1) and the manufacturing method (M1) may be omitted. The following describes an example where the power storage device (D1) is a lithium ion secondary battery. The power storage device (D1) may also be a nickel-hydrogen battery, a capacitor, or the like.

Illustration of some part of the constituent elements is omitted in the drawings referred to below to make the drawings easy to understand. Also, some members and hatching of some part may be omitted in the drawings referred to below to make the drawings easy to understand.

### (Embodiment 1)

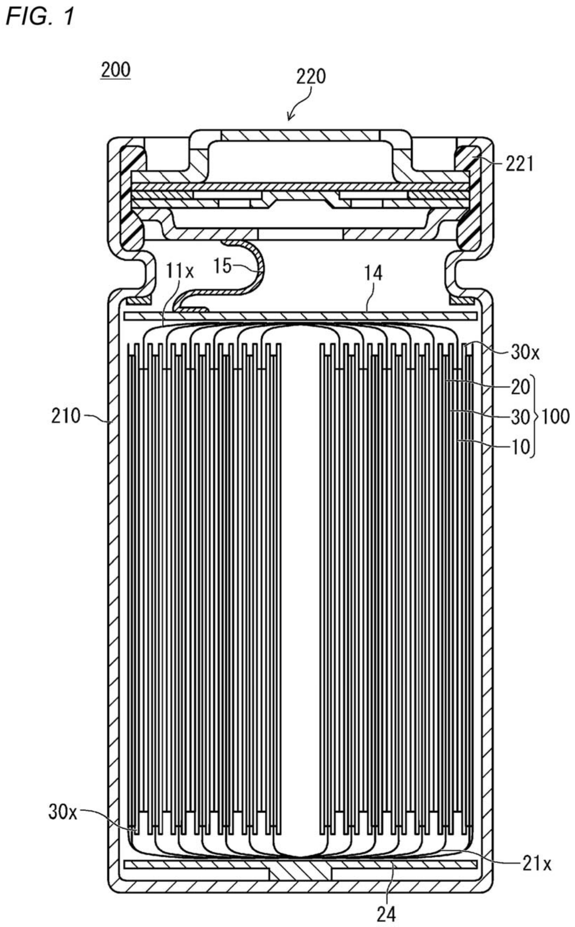

FIG. 1 is a longitudinal cross-sectional view schematically showing a configuration of a battery (power storage device) 200 according to Embodiment 1. Illustration of ridge portions is omitted in FIG. 1 to make the drawing easy to understand. The battery 200 is an example of the power storage device (D1) and is a cylindrical lithium ion secondary battery. The battery 200 includes a cylindrical wound body (electrode group) 100, a nonaqueous electrolyte (not shown), a case 210, a sealing plate 220, and a gasket 221. The wound body 100 and the nonaqueous electrolyte are housed in the case 210 that is made of a metal and has a bottom. The sealing plate 220 closes the opening of the case 210. The battery 200 further includes a positive electrode current collecting plate 14, a negative electrode current collecting plate 24, and a tab lead 15.

The wound body 100 is formed by winding a band-shaped positive electrode 10 and a band-shaped negative electrode 20 with a band-shaped separator 30 therebetween. In the wound body 100, the positive electrode 10, the negative electrode 20, and the separator 30 are stacked in a radial direction. The separator 30 is disposed between the positive electrode 10 and the negative electrode 20. The gasket 221 is disposed on a peripheral edge portion of the sealing plate 220. The inside of the case 210 is hermetically sealed by swaging the open end portion of the case 210 onto the gasket 221.

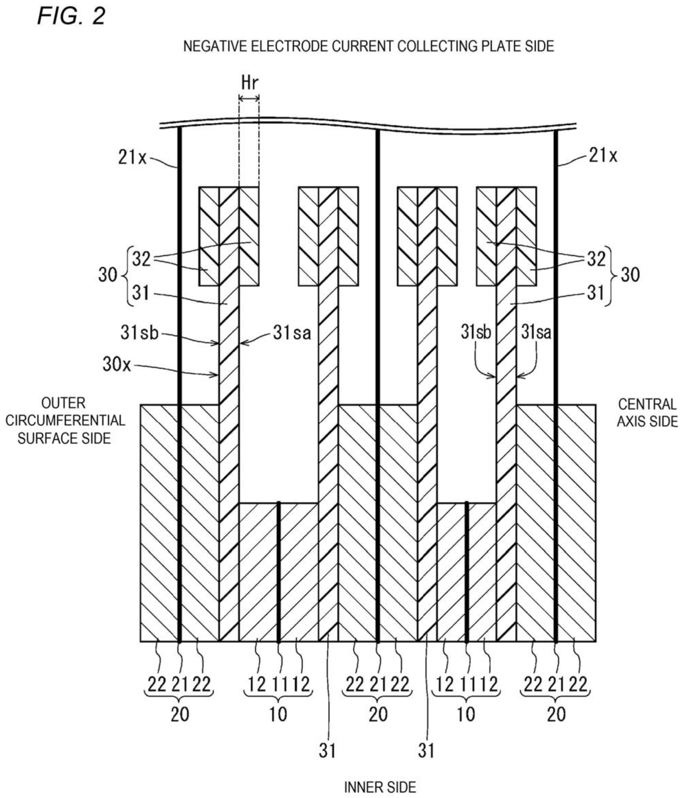

The separator 30 includes protruding portions 30x on both the positive electrode current collecting plate 14 side and the negative electrode current collecting plate 24 side. A ridge portion is formed in at least one of the protruding portion 30x on the positive electrode current collecting plate 14 side and the protruding portion 30x on the negative electrode current collecting plate 24 side. FIG. 2 shows an enlarged view of the vicinity of the protruding portion 30x on the negative electrode current collecting plate 24 side. Ridge portions 32 are formed in the protruding portion 30x shown in FIG. 2. FIG. 2 shows the height Hr of the ridge portions 32.

As shown in FIG. 2, the positive electrode 10 includes a positive electrode current collector 11 and positive electrode active material layers 12 formed on both surfaces of the positive electrode current collector 11. As shown in FIG. 1, the positive electrode current collector 11 includes an exposed portion 11x on which the positive electrode active material layers 12 are not formed. The exposed portion 11x on the positive electrode current collecting plate 14 side is welded to the positive electrode current collecting plate 14. The tab lead 15 is connected to the positive electrode current collecting plate 14 and the sealing plate 220. Thus, the positive electrode 10 is electrically connected to the sealing plate 220, and the sealing plate 220 functions as an external positive electrode terminal. Note that the positive electrode current collecting plate 14 may also be directly joined to the sealing plate 220.

As shown in FIG. 2, the negative electrode 20 includes a negative electrode current collector 21 and negative electrode active material layers 22 formed on both surfaces of the negative electrode current collector 21. The negative electrode current collector 21 includes an exposed portion 21x on which the negative electrode active material layers 22 are not formed. As shown in FIG. 1, the exposed portion 21x on the negative electrode current collecting plate 24 side is welded to the negative electrode current collecting plate 24. The negative electrode current collecting plate 24 is welded to an inner bottom surface of the case 210. Thus, the negative electrode 20 is electrically connected to the case 210, and the case 210 functions as an external negative electrode terminal.

Note that FIG. 1 shows a small gap between the exposed portion 11x and the positive electrode current collecting plate 14 and a small gap between the exposed portion 21x and the negative electrode current collecting plate 24 to make the drawing easy to understand, but the exposed portion 11x and the positive electrode current collecting plate 14 are welded to be connected to each other, and the exposed portion 21x and the negative electrode current collecting plate 24 are welded to be connected to each other.

As shown in FIG. 2, the protruding portion 30x protrudes outward past the positive electrode active material layers 12 and the negative electrode active material layers 22. In other words, the protruding portion 30x protrudes toward the outside of the electrode group past the positive electrode active material layers 12 and the negative electrode active material layers 22. As shown in FIG. 1, the protruding portion 30x is formed at each end (each of the two ends in the central axis direction) of the wound body 100.

The separator 30 includes a substrate 31 and ridge portions 32 formed on the substrate 31. The substrate 31 has a first surface 31sa that faces the central axis of the wound body and a second surface 31sb on the side (outer circumferential surface side) opposite to the first surface 31sa. FIG. 2 shows an example in which the ridge portions 32 are formed on both the first surface 31sa and the second surface 31sb. As described above, the mass of the ridge portion 32 formed on the first surface 31sa may be larger than the mass of the ridge portion 32 formed on the second surface 31sb. A configuration is also possible in which the ridge portion 32 is formed only on the first surface 31sa.

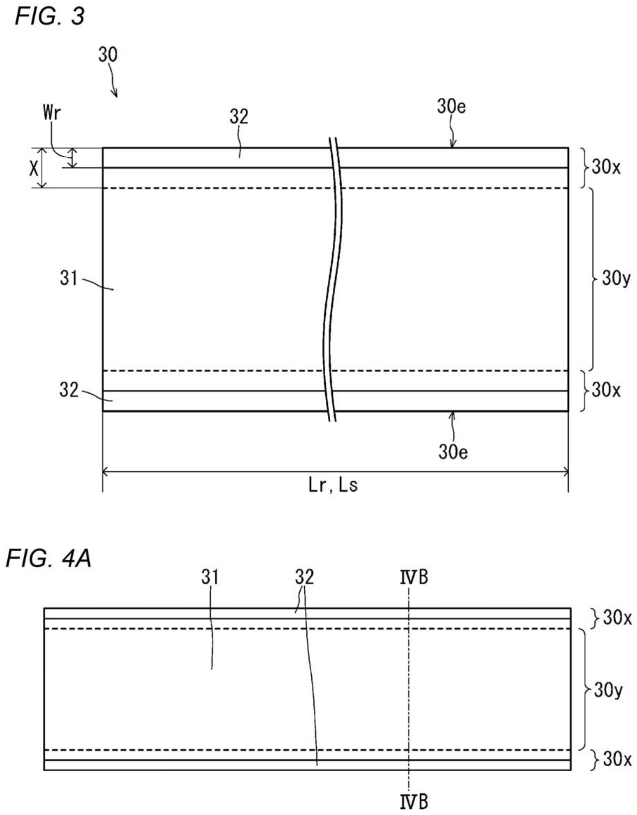

FIG. 3 is a top view showing the separator 30 shown in FIG. 2 in a spread state. FIG. 3 shows the length Ls of edges 30e of the protruding portions 30x, the length Lr of the ridge portions 32, the width Wr of the ridge portions 32, and the protruding length X of the protruding portions 30x. In the example shown in FIG. 3, the length Ls is the same as the length Lr.

As shown in FIG. 3, the separator 30 includes the substrate 31 and the ridge portions 32 formed on the substrate 31. The separator 30 has a band shape and includes a pair of edges (long sides) 30e opposite to each other. The vicinities of the edges 30e are the protruding portions 30x. A region of the separator 30 other than the protruding portions 30x will be referred to as a stacked portion 30y. The stacked portion 30y is a region on which the active material layers are stacked.

The ridge portions 32 are formed like ridges along the edges 30e of the protruding portions 30x. The ridge portions 32 are formed only in a part of the protruding portions 30x. In the example shown in FIGS. 2 and 3, the ridge portions 32 are in contact with the edges 30e. In this example, the ridge portions 32 are formed only on the edge 30e side of the protruding portions 30x, and are not formed in end portions of the protruding portions 30x on the side opposite to the edges 30e.

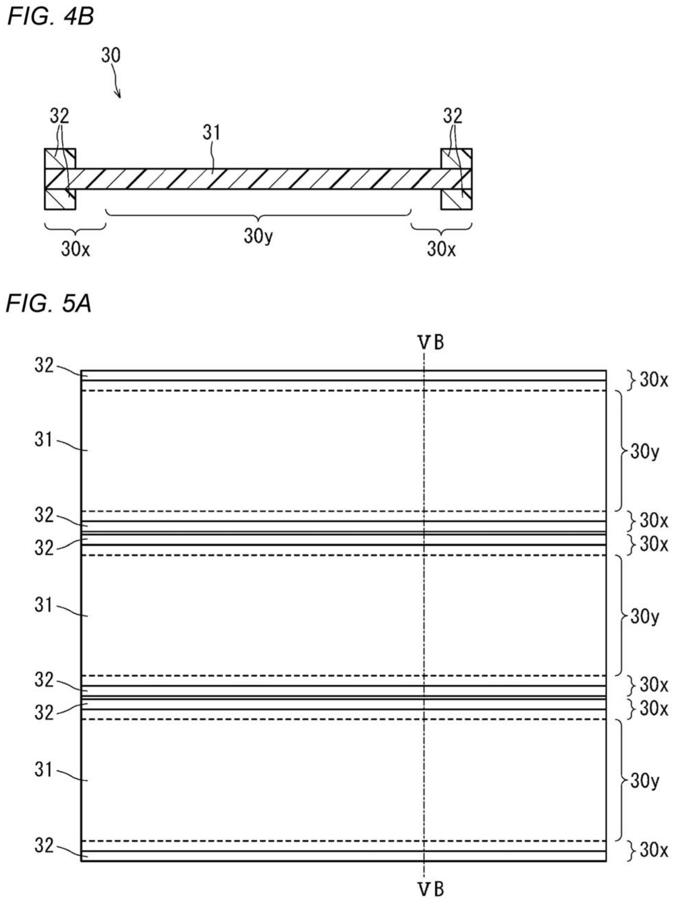

FIGS. 4A and 4B show an example of a method for manufacturing the separator 30. FIG. 4B is a cross-sectional view taken along a line IVB-IVB in FIG. 4A. In this method, the ridge portions 32 are formed at predetermined positions on the substrate 31 as shown in FIGS. 4A and 4B. Next, the substrate 31 is cut to have a predetermined length as necessary. Thus, the separator 30 is manufactured. The substrate 31 shown in FIGS. 4A and 4B has a width suitable for the use of the substrate 31 as is as the substrate of the separator 30.

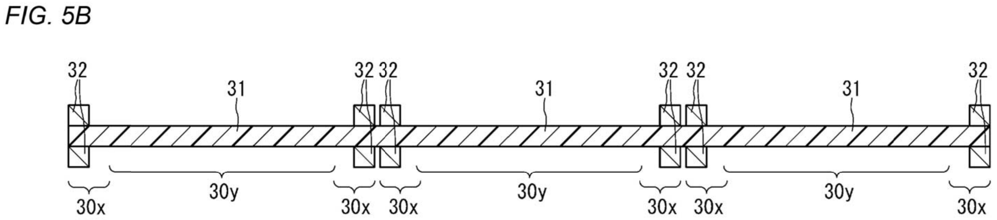

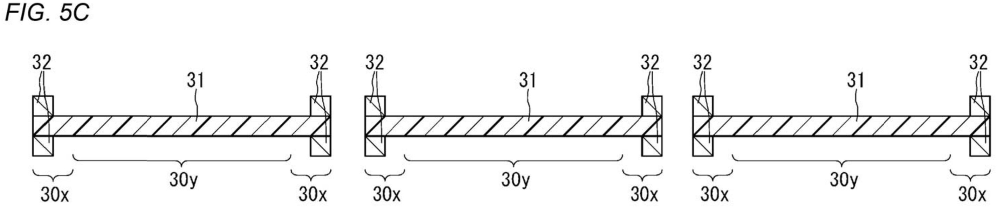

FIGS. 5A and 5B show a step of another example of the method for manufacturing the separator 30. FIG. 5B is a cross-sectional view taken along a line VB-VB in FIG. 5A. In this manufacturing method, first, a substrate 31x large enough to cut out a plurality of substrates 31 is prepared. Then, as shown in FIGS. 5A and 5B, ridge portions 32 are formed along portions that constitute edges 30e when the substrates 31 are cut out from the substrate 31x. At this time, a gap may be formed between adjacent two ridge portions as shown in FIGS. 5A and 5B to make a slit between the two ridge portions. Next, the substrate 31x is slit to have the width of the separator 30 as shown in the cross-sectional view of FIG. 5C. Next, the substrates 31 are cut to have a predetermined length as necessary. Thus, separators 30 are manufactured. With the manufacturing method shown in FIGS. 5A to 5C, the separators 30 can be manufactured with high productivity.

The following specifically describes examples of the power storage device (D2) and the manufacturing method (M2) according to the present disclosure with reference to the drawings. The constituent elements described above can be applied to constituent elements of the following examples. The following examples can be modified based on the above description. Matters described below may also be applied to the above embodiments. In the following examples, matters that are not essential to the power storage device (D2) and the manufacturing method (M2) may be omitted. The following describes an example where the power storage device (D2) is a lithium ion secondary battery.

Illustration of some part of the constituent elements is omitted in the drawings referred to below to make the drawings easy to understand. Also, hatching may be omitted in the drawings referred to below to make the drawings easy to understand.

### (Embodiment 2)

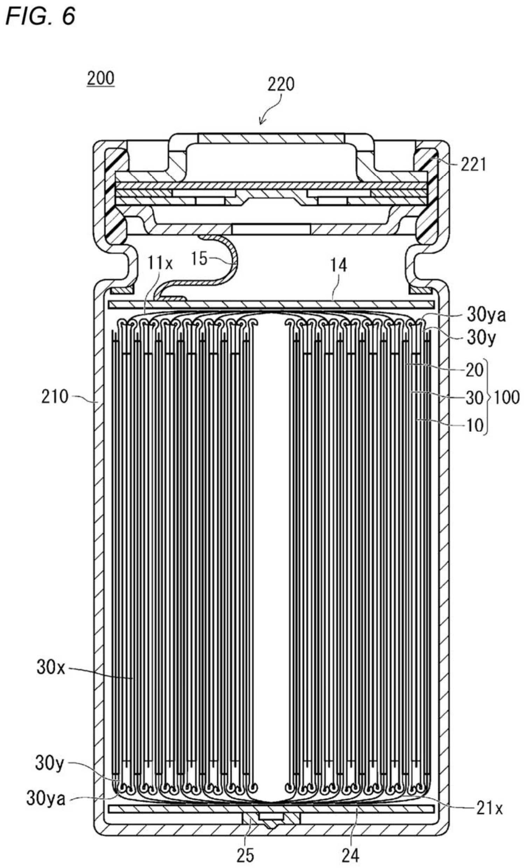

FIG. 6 is a longitudinal cross-sectional view schematically showing a configuration of a battery (power storage device) 200 according to Embodiment 2. The battery 200 is an example of the power storage device (D2) and is a cylindrical lithium ion secondary battery. The battery 200 includes a cylindrical wound body (electrode group) 100, a nonaqueous electrolyte (not shown), a case 210, a sealing plate 220, and a gasket 221. The wound body 100 and the nonaqueous electrolyte are housed in the case 210 that is made of a metal and has a bottom. The sealing plate 220 closes the opening of the case 210. The battery 200 further includes a positive electrode current collecting plate 14, a negative electrode current collecting plate 24, and a tab lead 15.

The wound body 100 is formed by winding a band-shaped positive electrode 10 and a band-shaped negative electrode 20 with a band-shaped separator 30 therebetween. In the wound body 100, the positive electrode 10, the negative electrode 20, and the separator 30 are stacked in a radial direction. The separator 30 is disposed between the positive electrode 10 and the negative electrode 20. The gasket 221 is disposed on a peripheral edge portion of the sealing plate 220. The inside of the case 210 is hermetically sealed by swaging the open end portion of the case 210 onto the gasket 221.

FIG. 6 shows an example in which the separator 30 includes protruding portions and curled portions on both the positive electrode current collecting plate 14 side and the negative electrode current collecting plate 24 side. However, a configuration is also possible in which the separator 30 includes a protruding portion only on either one of the two sides, or the separator 30 includes a curled portion only on either one of the two sides.

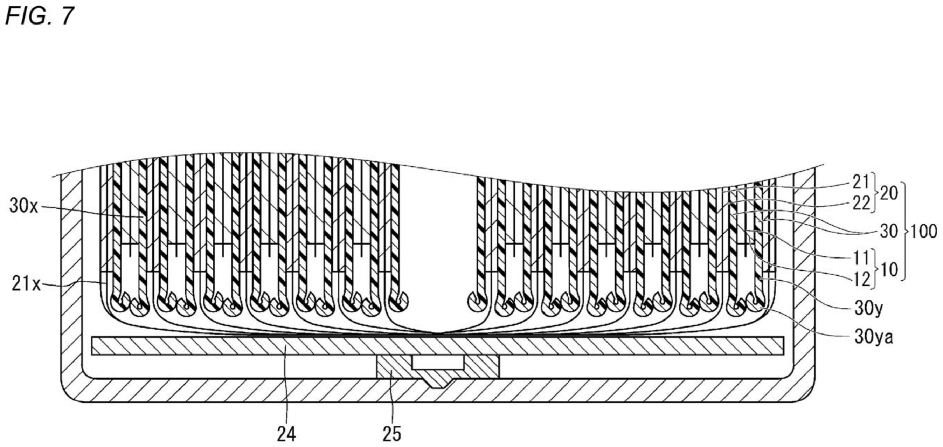

As shown in FIG. 7, the positive electrode 10 includes a positive electrode current collector 11 and positive electrode active material layers 12 formed on both surfaces of the positive electrode current collector 11. As shown in FIG. 6, the positive electrode current collector 11 includes an exposed portion 11x on which the positive electrode active material layers 12 are not formed. The exposed portion 11x on the positive electrode current collecting plate 14 side is bent toward the center of the wound body 100 and is welded to the positive electrode current collecting plate 14. The tab lead 15 is connected to the positive electrode current collecting plate 14 and the sealing plate 220. Thus, the positive electrode 10 is electrically connected to the sealing plate 220, and the sealing plate 220 functions as an external positive electrode terminal. Note that the positive electrode current collecting plate 14 may also be directly joined to the sealing plate 220.

The negative electrode 20 includes a negative electrode current collector 21 and negative electrode active material layers 22 formed on both surfaces of the negative electrode current collector 21. The negative electrode current collector 21 includes an exposed portion 21x on which the negative electrode active material layers 22 are not formed. The exposed portion 21x on the negative electrode current collecting plate 24 side is bent toward the center of the wound body 100 and is welded to the negative electrode current collecting plate 24. The negative electrode current collecting plate 24 is welded to an inner bottom surface of the case 210. Thus, the negative electrode 20 is electrically connected to the case 210, and the case 210 functions as an external negative electrode terminal.

Note that FIGS. 6 and 7 show a small gap between the exposed portion 11x and the positive electrode current collecting plate 14 and a small gap between the exposed portion 21x and the negative electrode current collecting plate 24 to make the drawings easy to understand, but the exposed portion 11x and the positive electrode current collecting plate 14 are welded to be connected to each other, and the exposed portion 21x and the negative electrode current collecting plate 24 are welded to be connected to each other. Also, illustration of heat resistant layers and ridge portions is omitted in FIGS. 6 and 7 to make the drawings easy to understand.

The following describes an example of the arrangement of the heat resistant layers and the ridge portions together with an example of a method for manufacturing the battery 200. In the example of the method for manufacturing the battery 200, first, the positive electrode 10, the negative electrode 20, and the separator 30 are prepared. These can be formed using the methods described above.

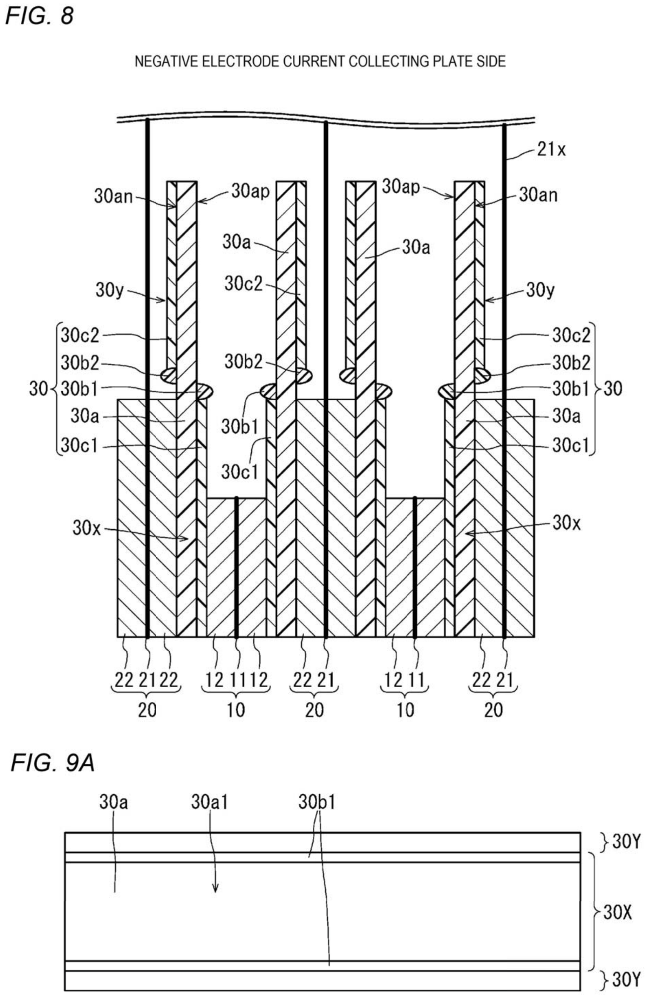

FIG. 8 schematically shows a portion (a portion in the vicinity of the negative electrode current collecting plate 24) of the wound body 100 formed by the positive electrode 10, the negative electrode 20, and the separator 30. Note that the wound body shown in FIG. 8 is in a state before curled portions 30ya are curled.

As shown in FIG. 8, the separator 30 includes a substrate 30a, a first ridge portion 30b1, a second ridge portion 30b2, a first heat resistant layer 30c1, and a second heat resistant layer 30c2. The separator 30 includes a stacked portion 30x in a region sandwiched between the positive electrode active material layer 12 and the negative electrode active material layer 22 and a protruding portion 30y protruding outward past the positive electrode active material layer 12 and the negative electrode active material layer 22. A part of the protruding portion 30y forms a curled portion 30ya. The substrate 30a has a positive electrode side surface 30ap on the adjacent positive electrode 10 side and a negative electrode side surface 30an on the adjacent negative electrode 20 side.

The stacked portion 30x includes the substrate 30a and the first heat resistant layer 30c1 formed on the positive electrode side surface 30ap of the substrate 30a. No heat resistant layer is formed on the negative electrode side surface 30an of the stacked portion 30x. The first heat resistant layer 30c1 is formed over the entire stacked portion 30x or approximately the entire stacked portion 30x. The first ridge portion 30b1 is formed at an end portion of the first heat resistant layer 30c1 on the protruding portion 30y side.

At least a part of the protruding portion 30y includes the substrate 30a and the second heat resistant layer 30c2 formed on the negative electrode side surface 30an of the substrate 30a. No heat resistant layer is formed on the positive electrode side surface 30ap of the protruding portion 30y. The second ridge portion 30b2 is formed along at least a part of an end portion of the second heat resistant layer 30c2 on the stacked portion 30x side.

The following describes an example of a method for manufacturing the separator in a case where curled portions are formed on both the positive electrode current collecting plate side and the negative electrode current collecting plate side. The separator to be manufactured (or the substrate) has at least one band-shaped two end region 30Y extending along at least one of two opposite sides (long sides) and a stacked region 30X other than the end region 30Y. First, first ridge portions 30b1 are formed on a first main surface 30a1 of the substrate 30a in such a manner as to extend in parallel with boundaries between end regions 30Y and the stacked region 30X (FIG. 9A). The end regions 30Y correspond to protruding portions 30y. At least a part of the stacked region 30X corresponds to the stacked portion 30x. The first ridge portions 30b1 are formed in end portions of a region in which the first heat resistant layer 30c1 is to be formed.

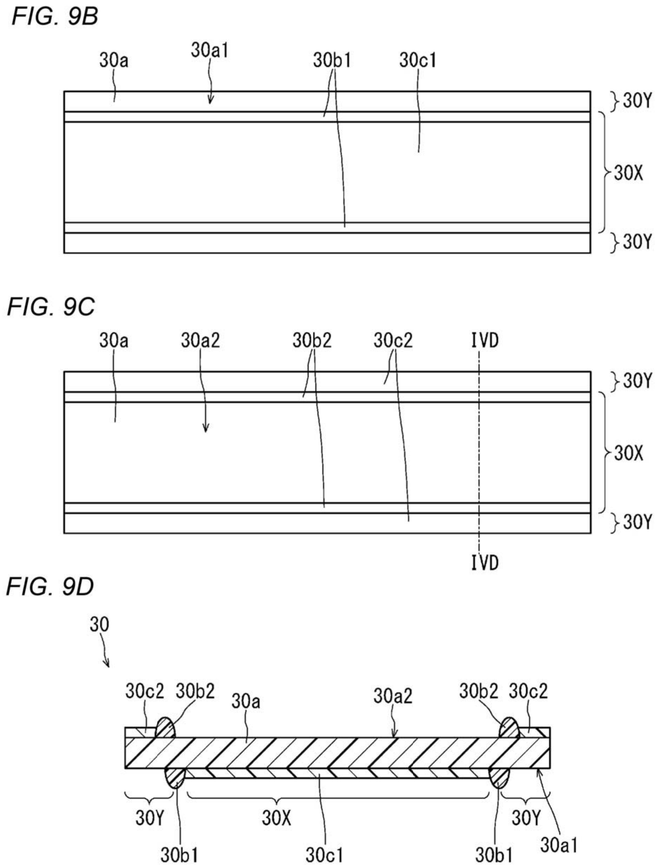

Next, as shown in FIG. 9B, the first heat resistant layer 30c1 is formed on the first main surface 30a1 of the substrate 30a. For example, the material of the first heat resistant layer 30c1 is applied to the predetermined region, and then the applied material is cured to form the first heat resistant layer 30c1. When the material of the first heat resistant layer 30c1 is applied, the first ridge portions 30b1 serve as stoppers that prevent the material from spreading to regions outward of the first ridge portions 30b1 on the substrate 30a. Thus, the first ridge portions 30b1 prevent the applied material from spreading and forming the first heat resistant layer 30c1 in the protruding portions 30y and the like. Moreover, there is no need to give consideration to spreading of the applied material, and accordingly, the first heat resistant layer 30c1 can be formed using a sufficient amount of the material. Therefore, it is possible to avoid a situation in which the first heat resistant layer 30c1 is formed insufficiently.

Next, as shown in FIG. 9C, second ridge portions 30b2 and second heat resistant layers 30c2 are formed in this order on the second main surface 30a2 of the substrate 30a. FIG. 9D is a cross-sectional view taken along a line IVD-IVD in FIG. 9C. The second ridge portions 30b2 are formed along end portions of the second heat resistant layers 30c2 on the stacked region 30X (stacked portion 30x) side.

The second ridge portions 30b2 prevent the second heat resistant layers 30c2 from spreading to a region inward of the second ridge portions on the substrate 30a. That is to say, the second ridge portions 30b2 exhibit the effect of stoppers similarly to the first ridge portions 30b1. Although an example in which the second ridge portions 30b2 are formed is described here, the second ridge portions 30b2 may be omitted.

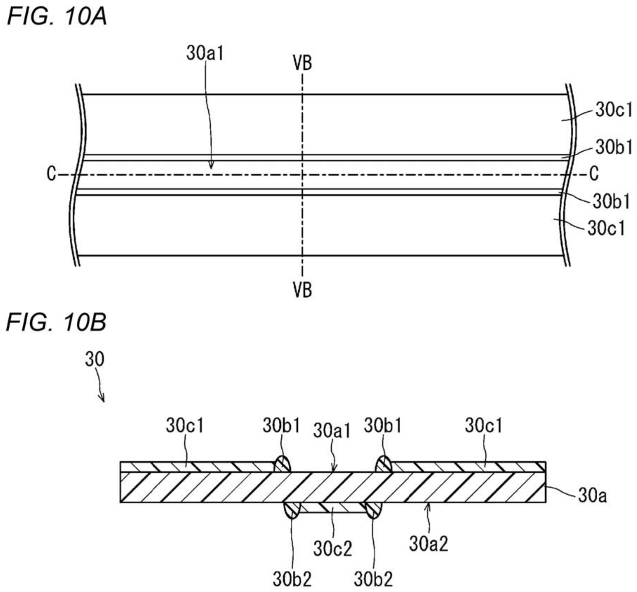

When a curled portion is to be formed only on either one of the positive electrode current collecting plate side and the negative electrode current collecting plate side, it is sufficient to form the second heat resistant layer 30c2 only in an end portion of the substrate 30a in which the curled portion is to be formed. In this case, the material of the second heat resistant layer 30c2 may be applied to only that end portion of the substrate 30a. Alternatively, the separator 30 may also be formed as described below. First, as shown in FIGS. 10A and 10B, first ridge portions 30b1, first heat resistant layers 30c1, second ridge portions 30b2, and a second heat resistant layer 30c2 are formed on an elongated substrate 30a in the order described above. FIG. 10B is a cross-sectional view taken along a line VB-VB in FIG. 10A. Next, the substrate 30a is cut into two sheets along a center line C in the width direction of the substrate 30a, and each sheet is cut to have a predetermined length. Thus, a plurality of separators 30 are obtained.

After the wound body 100 is formed, welding is performed. Specifically, as shown in FIG. 6, the exposed portion 11x of the positive electrode current collector 11 is welded to the positive electrode current collecting plate 14, and the exposed portion 21x of the negative electrode current collector 21 is welded to the negative electrode current collecting plate 24. The protruding portions 30y are heated by the heat generated during welding. In the protruding portions 30y, the heat resistant layer 30b is formed only on the surface on the adjacent negative electrode 20 side. Therefore, the curled portions 30ya curl toward the positive electrode 10 due to thermal contraction of the substrate 30a. At this time, the curled portions 30ya curl with the second heat resistant layer 30c2 facing outward and the substrate 30a facing inward. Note that it is also possible to further carry out a heating step of heating the protruding portions 30y after the welding step, or carry out the heating step of heating the protruding portions 30y before the welding step. If the heating step is carried out separately from the welding step, it is easy to uniformly curl the curled portions 30ya.

Thereafter, the wound body 100 and the electrolyte are housed in the case 210, and the case 210 is sealed with the sealing plate 220 and the gasket 221. Note that, when the wound body 100 is housed in the case, the wound body 100 is connected using the tab lead 15 and the negative electrode current collecting plate 24 as described above. Thus, the battery 200 is obtained.

### (Supplementary Notes)

The following technologies are disclosed by the above description.

### (Technology 1)

A power storage device including an electrode group that includes a positive electrode, a negative electrode, and a separator,
wherein, in the electrode group, the positive electrode, the negative electrode, and the separator are stacked in a stacking direction such that the separator is between the positive electrode and the negative electrode,
the positive electrode includes a positive electrode current collector and a positive electrode active material layer disposed on the positive electrode current collector,
the negative electrode includes a negative electrode current collector and a negative electrode active material layer disposed on the negative electrode current collector,
the separator includes a protruding portion protruding outward past the positive electrode active material layer and the negative electrode active material layer,
the separator includes a substrate and a ridge portion formed on the substrate, and
the ridge portion is formed like a ridge along at least a part of an edge of the protruding portion.

### (Technology 2)

The power storage device according to technology 1, further including at least one current collecting plate selected from the group consisting of a negative electrode current collecting plate to which the negative electrode current collector is connected and a positive electrode current collecting plate to which the positive electrode current collector is connected,
wherein the ridge portion is formed in the protruding portion on the at least one current collecting plate side.

### (Technology 3)

The power storage device according to technology 1 or 2,
wherein the substrate includes a substrate layer and a heat resistant layer formed on the substrate layer.

### (Technology 4)

The power storage device according to any one of technologies 1 to 3,
wherein the ridge portion is formed on both surfaces of the substrate.

### (Technology 5)

The power storage device according to any one of technologies 1 to 4,
wherein the electrode group is a wound body in which the positive electrode, the negative electrode, and the separator are stacked by being wound together.

### (Technology 6)

The power storage device according to technology 5,
wherein the substrate has a first surface facing a central axis of the wound body and a second surface opposite to the first surface, and
the ridge portion is formed such that a mass of the ridge portion on the first surface is larger than a mass of the ridge portion on the second surface.

### (Technology 7)

The power storage device according to any one of technologies 1 to 6,
wherein the ridge portion is located eccentrically toward the edge in the protruding portion.

### (Technology 8)

The power storage device according to technology 7,
wherein the ridge portion is not formed in an end portion of the protruding portion on a side opposite to the edge.

### (Technology 9)

The power storage device according to technology 1,
wherein the separator includes a stacked portion in a region sandwiched between the positive electrode active material layer and the negative electrode active material layer,
the stacked portion and the protruding portion include the substrate,
the substrate has a positive electrode side surface on the adjacent positive electrode side and a negative electrode side surface on the adjacent negative electrode side,
the stacked portion includes the substrate and a first heat resistant layer formed on the positive electrode side surface of the substrate,
at least one portion of the protruding portion includes the substrate and a second heat resistant layer formed on the negative electrode side surface of the substrate,
the ridge portion includes a first ridge portion having insulating properties and formed on the positive electrode side surface of the substrate, and
the first ridge portion is formed along at least a part of an end portion of the first heat resistant layer on the protruding portion side.

### (Technology 10)

The power storage device according to technology 9,
wherein the at least one portion of the protruding portion is a curled portion that is curled with the second heat resistant layer facing outward.

### (Technology 11)

The power storage device according to technology 10, further including a negative electrode current collecting plate,
wherein the negative electrode current collector is welded to the negative electrode current collecting plate, and
the protruding portion on the negative electrode current collecting plate side includes the curled portion.

### (Technology 12)

The power storage device according to technology 11,
wherein a distance between the negative electrode and the negative electrode current collecting plate is shorter than a distance between the positive electrode and the negative electrode current collecting plate.

### (Technology 13)

The power storage device according to any one of technologies 9 to 12,
wherein the first ridge portion contains a resin.

### (Technology 14)

The power storage device according to any one of technologies 9 to 13,
wherein the first ridge portion contains inorganic particles having insulating properties.

### (Technology 15)

The power storage device according to any one of claims 9 to 14,
wherein the first ridge portion has a height larger than a thickness of the first heat resistant layer.

### (Technology 16)

The power storage device according to any one of technologies 9 to 15,
wherein the first ridge portion is formed discontinuously.

### (Technology 17)

The power storage device according to any one of claims 9 to 16,
wherein a second ridge portion having insulating properties is formed on the negative electrode side surface of the substrate, and
the second ridge portion is formed along at least a part of an end portion of the second heat resistant layer on the stacked portion side.

### (Technology 18)

The power storage device according to technology 17,
wherein the second ridge portion has a height larger than a thickness of the second heat resistant layer.

### (Technology 19)

The power storage device according to any one of claims 9 to 18,
wherein, in the electrode group, the positive electrode, the negative electrode, and the separator are stacked by being wound together.

### (Technology 20)

A separator for a power storage device, including:
a substrate having a first main surface and a second main surface;
a first heat resistant layer and a first ridge portion formed on the first main surface; and
a second heat resistant layer formed on the second main surface,
wherein the separator has at least one band-shaped end region extending along at least one of two opposite sides and a stacked region other than the end region,
the first heat resistant layer is formed on the first main surface of the stacked region,
the second heat resistant layer is formed on the second main surface of the end region, and
the first ridge portion is formed along at least a part of an end portion of the first heat resistant layer on the end region side.

### (Technology 21)

The separator according to technology 20, further including a second ridge portion that is formed on the second main surface along at least a part of an end portion of the second heat resistant layer on the stacked region side.

### (Technology 22)

A method for manufacturing a separator for a power storage device, the separator including a substrate having a first main surface and a second main surface, the separator having at least one band-shaped two end region extending along at least one of two opposite sides and a stacked region other than the end region,
the method including:
a step (X) of forming a first ridge portion and a first heat resistant layer on the first main surface of the substrate; and
a step (Y) of forming a second heat resistant layer on the second main surface of the end region,
wherein the step (X) includes:
   a step (Xa) of forming the first ridge portion on the first main surface in such a manner as to extend in parallel with a boundary between the end region and the stacked region; and
   a step (Xb) of forming the first heat resistant layer on the first main surface of the stacked region with use of the first ridge portion.

### (Technology 23)

The method according to technology 22,
wherein the step (Y) includes:
a step (Ya) of forming a second ridge portion on the second main surface along the boundary; and
a step (Yb) of forming the second heat resistant layer on the second main surface of the end region with use of the second ridge portion.

### [Industrial Applicability]

The present disclosure can be used for a power storage device, a separator for a power storage device, and a method for manufacturing the same.

Although the presently preferred embodiments of the present disclosure have been described, such a disclosure is not to be interpreted as limiting. Various alterations and modifications will no doubt become apparent to those skilled in the art to which the present disclosure pertains, after having read the above disclosure. Accordingly, it is intended that the appended claims be interpreted as covering all alterations and modifications that fall within the true spirit and scope of the present disclosure.

### [Reference Signs List]

(Power Storage Device (D1))
   10: positive electrode, 11: positive electrode current collector, 12: positive electrode active material layer, 14: positive electrode current collecting plate, 20: negative electrode, 21: negative electrode current collector, 22: negative electrode active material layer, 24: negative electrode current collecting plate, 30: separator, 30e: edge, 30x: protruding portion, 31: substrate, 31sa: first surface, 31sb: second surface, 32: ridge portion, 100: wound body (electrode group), 200: battery (power storage device)
(Power Storage Device (D2))
   30: separator, 30b1: first ridge portion, 30b2: second ridge portion, 30c1: first heat resistant layer, 30c2: second heat resistant layer, 30x: stacked portion, 30X: stacked region, 30y: protruding portion, 30Y: end region, 30ya: curled portion

## Claims

1. A power storage device comprising an electrode group that includes a positive electrode, a negative electrode, and a separator,
wherein, in the electrode group, the positive electrode, the negative electrode, and the separator are stacked in a stacking direction such that the separator is between the positive electrode and the negative electrode,
the positive electrode includes a positive electrode current collector and a positive electrode active material layer disposed on the positive electrode current collector,
the negative electrode includes a negative electrode current collector and a negative electrode active material layer disposed on the negative electrode current collector,
the separator includes a protruding portion protruding outward past the positive electrode active material layer and the negative electrode active material layer,
the separator includes a substrate and a ridge portion formed on the substrate, and
the ridge portion is formed like a ridge along at least a part of an edge of the protruding portion.

2. The power storage device according to claim 1, further comprising
at least one current collecting plate selected from the group consisting of a negative electrode current collecting plate to which the negative electrode current collector is connected and a positive electrode current collecting plate to which the positive electrode current collector is connected,
wherein the ridge portion is formed in the protruding portion on the at least one current collecting plate side.

3. The power storage device according to claim 1 or 2,
wherein the substrate includes a substrate layer and a heat resistant layer formed on the substrate layer.

4. The power storage device according to claim 1 or 2,
wherein the ridge portion is formed on both surfaces of the substrate.

5. The power storage device according to claim 1 or 2,
wherein the electrode group is a wound body in which the positive electrode, the negative electrode, and the separator are stacked by being wound together.

6. The power storage device according to claim 5,
wherein the substrate has a first surface facing a central axis of the wound body and a second surface opposite to the first surface, and
the ridge portion is formed such that a mass of the ridge portion on the first surface is larger than a mass of the ridge portion on the second surface.

7. The power storage device according to claim 1 or 2,
wherein the ridge portion is located eccentrically toward the edge in the protruding portion.

8. The power storage device according to claim 7,
wherein the ridge portion is not formed in an end portion of the protruding portion on a side opposite to the edge.

9. The power storage device according to claim 1,
wherein the separator includes a stacked portion in a region sandwiched between the positive electrode active material layer and the negative electrode active material layer,
the stacked portion and the protruding portion include the substrate,
the substrate has a positive electrode side surface on the adjacent positive electrode side and a negative electrode side surface on the adjacent negative electrode side,
the stacked portion includes the substrate and a first heat resistant layer formed on the positive electrode side surface of the substrate,
at least one portion of the protruding portion includes the substrate and a second heat resistant layer formed on the negative electrode side surface of the substrate,
the ridge portion includes a first ridge portion having insulating properties and formed on the positive electrode side surface of the substrate, and
the first ridge portion is formed along at least a part of an end portion of the first heat resistant layer on the protruding portion side.

10. The power storage device according to claim 9,
wherein the at least one portion of the protruding portion is a curled portion that is curled with the second heat resistant layer facing outward.

11. The power storage device according to claim 10, further comprising
a negative electrode current collecting plate,
wherein the negative electrode current collector is welded to the negative electrode current collecting plate, and
the protruding portion on the negative electrode current collecting plate side includes the curled portion.

12. The power storage device according to claim 11,
wherein a distance between the negative electrode and the negative electrode current collecting plate is shorter than a distance between the positive electrode and the negative electrode current collecting plate.

13. The power storage device according to claim 9 or 10,
wherein the first ridge portion contains a resin.

14. The power storage device according to claim 9 or 10,
wherein the first ridge portion contains inorganic particles having insulating properties.

15. The power storage device according to claim 9 or 10,
wherein the first ridge portion has a height larger than a thickness of the first heat resistant layer.

16. The power storage device according to claim 9 or 10,
wherein the first ridge portion is formed discontinuously.

17. The power storage device according to claim 9 or 10,
wherein a second ridge portion having insulating properties is formed on the negative electrode side surface of the substrate, and
the second ridge portion is formed along at least a part of an end portion of the second heat resistant layer on the stacked portion side.

18. The power storage device according to claim 17,
wherein the second ridge portion has a height larger than a thickness of the second heat resistant layer.

19. The power storage device according to claim 9 or 10,
wherein, in the electrode group, the positive electrode, the negative electrode, and the separator are stacked by being wound together.

20. A separator for a power storage device, comprising:
a substrate having a first main surface and a second main surface;
a first heat resistant layer and a first ridge portion formed on the first main surface; and
a second heat resistant layer formed on the second main surface,
wherein the separator has at least one band-shaped end region extending along at least one of two opposite sides and a stacked region other than the end region,
the first heat resistant layer is formed on the first main surface of the stacked region,
the second heat resistant layer is formed on the second main surface of the end region, and
the first ridge portion is formed along at least a part of an end portion of the first heat resistant layer on the end region side.

21. The separator according to claim 20, further comprising
a second ridge portion that is formed on the second main surface along at least a part of an end portion of the second heat resistant layer on the stacked region side.

22. A method for manufacturing a separator for a power storage device, the separator including a substrate having a first main surface and a second main surface, the separator having at least one band-shaped two end region extending along at least one of two opposite sides and a stacked region other than the end region,
the method comprising:
a step (X) of forming a first ridge portion and a first heat resistant layer on the first main surface of the substrate; and
a step (Y) of forming a second heat resistant layer on the second main surface of the end region,
wherein the step (X) includes:
a step (Xa) of forming the first ridge portion on the first main surface in such a manner as to extend in parallel with a boundary between the end region and the stacked region; and
a step (Xb) of forming the first heat resistant layer on the first main surface of the stacked region with use of the first ridge portion.

23. The method according to claim 22,
wherein the step (Y) includes:
a step (Ya) of forming a second ridge portion on the second main surface along the boundary; and
a step (Yb) of forming the second heat resistant layer on the second main surface of the end region with use of the second ridge portion.
